# EUROPÄISCHE PATENTSCHRIFT

(11) **EP 2 393 877 B1**
(45) Veröffentlichungstag und Bekanntmachung des Hinweises auf die Patenterteilung: **05.12.2012**
(21) Anmeldenummer: 10701381.5
(22) Anmeldetag: 29.01.2010
(51) Int. Cl.: C08L 25/04, C08L 77/00, C08L 21/00

(54) **STYROLCOPOLYMERE UND POLYAMIDE ENTHALTENDE THERMOPLASTISCHE FORMMASSEN**
THERMOPLASTIC MOLDING COMPOUNDS CONTAINING STYRENE COPOLYMERS AND POLYAMIDES
MATIÈRES À MOULER THERMOPLASTIQUES CONTENANT DES COPOLYMÈRES DE STYRÈNE ET DES POLYAMIDES

(30) Priorität: 06.02.2009 EP 09152295
(43) Veröffentlichungstag der Anmeldung: 14.12.2011
(73) Patentinhaber: Styrolution GmbH, 60325 Frankfurt am Main (DE)
(72) Erfinder: WEBER, Martin, 67487 Maikammer (DE); SCHILLO, Simone, 67069 Ludwigshafen (DE); BLINZLER, Marko, 68163 Mannheim (DE); DEININGER, Jürgen, 68723 Oftersheim (DE)
(74) Vertreter: Jacobi, Markus Alexander
(86) Internationale Anmeldenummer: PCT/EP2010/051042
(87) Internationale Veröffentlichungsnummer: WO 2010/089245

(56) Entgegenhaltungen:
- WO-A-2005/040281

## Beschreibung

Die Erfindung betrifft Styrolcopolymere und Polyamide enthaltende thermoplastische Formmassen, Verfahren zu ihrer Herstellung, ihre Verwendung sowie daraus hergestellte Formkörper, Fasern und Folien.

Polymere Blends aus Styrolcopolymeren und Polyamiden sind an sich bekannt. Binäre Blends aus Polyamiden und Styrolcopolymeren weisen aufgrund der Unverträglichkeit zwischen Polyamid und beispielsweise Styrol-Acrylnitril-Copolymer sehr schlechte Zähigkeiten auf. Durch Verwendung funktionalisierter Styrol-Acrylnitril-Copolymere (SAN-Copolymere) kann die Zähigkeit der Blends signifikant gesteigert werden. Außerdem weisen derartige Produkte interessante Eigenschaften wie eine hohe Schlagzähigkeit, gute Fließfähigkeit und Chemikalienresistenz auf. Als Verträglichkeitsvermittler eignen sich vor allem Styrol-Acrylnitril-Maleinsäureanhydrid-Terpolymere, Styrol-N-Phenylmaleinimid-Maleinsäureanhydrid-Terpolymere und Methylmethacrylat-Maleinsäureanhydrid-Copolymere. Es wird davon ausgegangen, dass die Amino- bzw. Carboxylendgruppen der Polyamide mit den funktionellen Gruppen der genannten Co- und Terpolymere reagieren, wobei in situ Copolymere entstehen, welche die Verträglichkeit zwischen der Styrolcopolymerphase und der Polyamidphase herstellen. Solche Polymermischungen mit modifizierter Grenzfläche werden im Allgemeinen als Polymerlegierungen bezeichnet.

Für viele Anwendungen weisen die bisher bekannten Styrolcopolymer-Polyamid-Blends ungenügende UV-Stabilität auf. Eine Verbesserung der Witterungsbeständigkeit kann beispielsweise durch Verwendung von Schlagzäh-Modifiem erreicht werden, die keine olefinischen Doppelbindungen aufweisen. Ihre Verwendung kann neben höheren Stoffkosten auch zu einer signifikanten Verminderung der Kerbschlagzähigkeit bei niedrigen Temperaturen führen. Zudem können Polyamide mit sterisch gehinderten Piperidin-Endgruppen als HALS-Stabilisatoren eingesetzt werden. Die Verwendung der beispielsweise Triacetondiamin (TAD)-haltigen Formmassen führt jedoch unter ungünstigen Verarbeitungsbedingungen zu einem Abfall der Schädigungsarbeit bei niedrigen Temperaturen.

Aus der WO 2005/040281 sind thermoplastische Formmassen bekannt, die Polyamid mit TAD-Endgruppen, Styrol-Acrylnitril-Maleinsäureanhydrid-Terpolymere, Pfropfkautschuke und häufig Phthalsäureanhydrid enthalten. Die beschriebenen Formmassen weisen nicht für alle Anwendungen ein optimales Eigenschaftsprofil auf.

Aufgabe der vorliegenden Erfindung ist die Bereitstellung von thermoplastischen Formmassen auf Basis von Styrolcopolymeren und Polyamiden mit verbesserter Farbstabilität und guter Fließfähigkeit sowie guter Schlagzähigkeit bei Umgebungstemperatur und niedrigen Temperaturen sowie einer verbesserten Schädigungsartieit bei niedrigen Temperaturen.

Die Aufgabe wird erfindungsgemäß gelöst durch eine thermoplastische Formmasse enthaltend,
a) 3 bis 79 Gew.-% eines oder mehrerer Styrolcopolymere, die keine von Maleinsäureanhydrid abgeleiteten Einheiten aufweisen, als Komponente A,
b) 15 bis 91 Gew.-% eines oder mehrerer Polyamide mit, bezogen auf die gesamte Komponente B, 0,1 bis 0,2 Gew.-% Triacetondiamin (TAD)-Endgruppen als Komponente B,
c) 5 bis 50 Gew.-% eines oder mehrerer schlagzäh-modifizierender Kautschuke als Komponente C,
d) 1 bis 25 Gew.-% eines Styrolcopolymeren, das, bezogen auf die gesamte Komponente D, 1,9 bis 2,3 Gew.-% von Maleinsäureanhydrid abgeleitete Einheiten aufweist, als Komponente D,
e) 0 bis 40 Gew.-% weiterer Kautschuke als Komponente E,
f) 0 bis 50 Gew.-% eines oder mehrerer faser- oder teilchenförmiger Füllstoffe als Komponente F,
g) 0 bis 40 Gew.-% weiterer Zusatzstoffe als Komponente G,
wobei die Formmasse weniger als 0,1 Gew.-% Phthalsäureanhydrid enthält und die Gesamtmenge der Komponenten A bis D und gegebenenfalls E bis G 100 Gew.-% ergibt. Die Formmasse kann auch aus den genannten Inhaltsstoffen bestehen.

Es wurde erfindungsgemäß gefunden, dass eine spezielle Kombination des TAD-Endgruppengehalts im Polyamid mit einem spezifischen Anteil Maleinsäureanhydrid-Einheiten enthaltender Styrolcopolymere zu den erfindungsgemäßen Vorteilen führt.

Der Anteil der Komponente A in den thermoplastischen Formmassen beträgt 3 bis 79 Gew.-%, vorzugsweise 10 bis 25 Gew.-%, insbesondere 14 bis 19 Gew.-%.

Komponente B ist in den thermoplastischen Formmassen in einer Menge von 15 bis 91 Gew.-%, vorzugsweise 25 bis 70 Gew.-%, insbesondere 36 bis 53 Gew.-% enthalten.

Komponente C ist in den thermoplastischen Formmassen in einer Menge von 5 bis 50 Gew.-%, vorzugsweise 15 bis 45 Gew.-%, insbesondere 28 bis 35 Gew.-% enthalten.

Komponente D ist in den thermoplastischen Formmassen in einer Menge von 1 bis 25 Gew.-%, vorzugsweise 2 bis 10 Gew.-%, insbesondere 4 bis 6 Gew.-% enthalten.

Komponente E ist in den thermoplastischen Formmassen in einer Menge von 0 bis 40 Gew.-%, vorzugsweise 0 - 30 Gew.-%, insbesondere 0 - 17 Gew.-% enthalten. Sofern Komponente E vorliegt, beträgt die Mindestmenge 1 Gew.-%.

Komponente F ist in den thermoplastischen Formmassen in einer Menge von 0 bis 50 Gew.-%, vorzugsweise 0 - 25 Gew.-%, insbesondere 0 - 8 Gew.-% enthalten. Sofern Komponente F vorliegt, ist sie vorzugsweise in einer Mindestmenge von 0,1 Gew.-% enthalten.

Komponente G ist in den thermoplastischen Formmassen in einer Menge von 0 bis 40 Gew.-%, vorzugsweise 0 - 30 Gew.-%, insbesondere 0 - 17 Gew.-% enthalten. Sofern Komponente G vorliegt, beträgt ihre Mindestmenge 0,1 Gew.-%.

Sofern eine oder mehrere der Komponenten E bis G vorliegen, vermindert sich die maximal mögliche Menge der Komponenten A - D entsprechend um die hinzukommende Mindestmenge der Komponenten E - G, so dass sich in jedem Fall eine Gesamtmenge von 100 Gew.-% ergibt.

### Komponente A

Als Komponente A enthalten die erfindungsgemäßen thermoplastischen Formmassen ein oder mehrere Styrolcopolymere, die keine von Maleinsäureanhydrid abgeleiteten Einheiten aufweisen. Dabei können in den Copolymeren neben Styrol beliebige geeignete Comonomere vorliegen. Bevorzugt handelt es sich um ein Styrol-Acrylnitril-Copolymer oder alpha-Methylstyrol-Acrylnitril-Copolymer.

Als Komponente A der thermoplastischen Matrix M sind grundsätzlich alle dem Fachmann bekannten und in der Literatur beschriebenen Styrol-Acrylnitril-Copolymere, α-Methylstyrol-Acrylnitril-Copolymere oder deren Mischungen einsetzbar, sofern deren Mischungen eine Viskositätszahl VZ (gemessen nach DIN 53727 bei 25 °C als 0,5 gew.-%ige Lösung in Dimethylformamid; diese Messmethode gilt auch für alle im folgenden genannten Viskositätszahlen VZ) gleich oder kleiner als 85 ml/g haben.

Bevorzugte Komponenten A sind aufgebaut aus 50 bis 90 Gew.-%, bevorzugt 60 bis 80 Gew.-%, insbesondere 65 bis 78 Gew.-%, Styrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Weiterhin bevorzugte Komponenten A sind aufgebaut aus 50 bis 90 Gew.-%, bevorzugt 60 bis 80 Gew.%, insbesondere 65 bis 78 Gew.-%, α-Methylstyrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Ebenfalls bevorzugte Komponenten A sind Mischungen dieser Styrol-Acrylnitril-Copolymere und dieser α-Methylstyrol-Acrylnitril-Copolymere.

Als oben genannte weitere Monomere sind alle copolymerisierbaren und von Maleinsäureanhydrid verschiedene Monomere einsetzbar, beispielsweise p-Methylstyrol, t-Butylstyrol, Vinylnaphthalin, Alkylacrylate und/oder Alkylmethacrylate, beispielsweise solche mit C₁- bis C₈-Alkylresten, N-Phenylmaleinimid oder deren Mischungen.

Die Copolymere der Komponente A lassen sich nach an sich bekannten Methoden herstellen. Sie lassen sich z. B. durch radikalische Polymerisation, insbesondere durch Emulsions-, Suspensions-, Lösungs- oder Massepolymerisation herstellen.

Die Styrolcopolymere sind bevorzugt kautschukfrei.

Als Komponente B enthalten die erfindungsgemäßen thermoplastischen Formmassen eines oder mehrere Polyamide mit, bezogen auf die gesamte Komponente B, 0,1 - 0,2 Gew.-% Triacetondiamin (TAD)-Endgruppen.

Dabei kann es sich auch um Mischungen von Polyamiden mit TAD-Endgruppen mit Polyamiden ohne TAD-Endgruppen handeln. Wichtig ist, dass insgesamt auf die Komponente B bezogen 0,1 - 0,2 Gew.-% Triacetondiamin-Endgruppen vorliegen. Bevorzugt liegen 0,14 - 0,18 Gew.-% TAD-Endgruppen vor, insbesondere 0,15 - 0,17 Gew.-% TAD-Endgruppen.

Als Komponente B wird erfindungsgemäß ein Polyamid eingesetzt, von dessen Endgruppen mindestens eine sich von der Piperidinverbindung TAD ableitet. Es können auch Mischungen aus zwei oder mehreren unterschiedlichen Polyamiden als Komponente B eingesetzt werden. Beispielsweise können Polyamide unterschiedlicher Grundstruktur aber gleicher Endgruppe verwendet werden. Es ist aber auch möglich Polyamide mit gleichem Grundgerüst und Endgruppen einzusetzen, die sich von unterschiedlichen Piperidinverbindungen ableiten. Des Weiteren ist es möglich, Mischungen aus Polyamiden zu verwenden, die unterschiedliche Gehalte an Endgruppen aufweisen, die sich von den Piperidinverbindungen ableiten.

Unter Polyamiden werden Homopolymere oder Copolymere von synthetischen langkettigen Polyamiden verstanden, die als wesentlichen Bestandteil wiederkehrend AmidGruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 5,10 (Polypentamethylenadipamid), Nylon 6,10 (Polyhexamethylensebacamid), Nylon 7 (Polyenantholactam), Nylon 11 (Polyundecanolactam), Nylon 12 (Polydodecanolactam). Diese Polyamide tragen bekanntermaßen den generischen Namen Nylon.

Die Herstellung von Polyamiden kann prinzipiell nach zwei Verfahren erfolgen.

Bei der Polymerisation aus Dicarbonsäuren und Diaminen, wie auch bei der Polymerisation aus Aminosäuren reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation aus Carbonsäureamiden reagieren die Amino- und Amid-Endgruppen der Ausgansmonomere oder Ausgangsoligomere miteinander unter Bildung einer Amid-Gruppe und Ammoniak. Der Ammoniak kann anschließend von der Polymermasse entfernt werden.

Als Ausgangsmonomere oder Ausgangsoligomere zur Herstellung von Polyamiden eignen sich beispielsweise
(1) C₂- bis C₂₀-, vorzugsweise C₃- bis C₁₈- Aminosäuren, wie 6-Aminocapronsäure, 11-Aminoundecansäure, sowie deren Dimere, Trimere, Tetramere, Pentamere oder Hexamere,
(2) C₂- bis C₂₀- Aminosäureamide, wie 6-Aminocapronsäureamid, 11-Aminoundecansäureamid sowie deren Dimere, Trimere, Tetramere, Pentamere oder Hexamere,
(3) Umsetzungsprodukte von
   (3a) C₂- bis C₂₀-, vorzugsweise C₂- bis C₁₂-Alkylendiaminen, wie Tetramethylendiamin oder vorzugsweise Hexamethylendiamin,
      mit
   (3b) einer C₂- bis C₂₀-, vorzugsweise C₂- bis C₁₄-aliphatischen Dicarbonsäure, wie Sebacinsäure, Decandicarbonsäure oder Adipinsäure,
      sowie deren Dimere, Trimere, Tetramere, Pentamere oder Hexamere,
   (4) Umsetzungsprodukte von (3a), mit
      (4b) einer C₈- bis C₂₀-, vorzugsweise C₈- bis C₁₂-aromatischen Dicarbonsäure oder deren Derivate beispielsweise Chloride, wie 2,6-Naphthalindicarbonsäure, vorzugsweise Isopthalsäure oder Terephthalsäure,
         sowie deren Dimere, Trimere, Tetramere, Pentamere oder Hexamere,
      (5) Umsetzungsprodukte von (3a), mit
         (5b) einer C₉- bis C₂₀-, vorzugsweise C₉- bis C₁₈-arylaliphatischen Dicarbonsäure oder deren Derivate, beispielsweise Chloride, wie o-, m- oder p-Phenylendiessigsäure,
            sowie deren Dimere, Trimere, Tetramere, Pentamere oder Hexamere,
      (6) Umsetzungsprodukte von
         (6a) C₆- bis C₂₀-, vorzugsweise C₆- bis C₁₀-aromatischen Diaminen, wie, m- oder p-Phenylendiamin, mit (3b)
            sowie deren Dimere, Trimere, Tetramere, Pentamere oder Hexamere,
      (7) Umsetzungsprodukte von
         (7a), C₇- bis C₂₀-, vorzugsweise C₈- bis C₁₈- arylaliphatischen Diaminen, wie m- oder p-Xylylendiamin, mit (3b)
            sowie deren Dimere, Trimere, Tetramere, Pentamere oder Hexamere,
      (8) Monomere oder Oligomere eines C₂- bis C₂₀-, vorzugsweise C₂- bis C₁₈- arylaliphatischen oder vorzugsweise aliphatischen Lactams, wie Enantholactam, Undecanolactam, Dodecanolactam oder Caprolactam,
   sowie Homopolymere, Copolymere oder Mischungen solcher Ausgangsmonomere oder Ausgangsoligomere.

Bevorzugt sind dabei solche Ausgangsmonomere oder Ausgangsoligomere, die bei der Polymerisation zu den Polyamiden Nylon 6, Nylon 6,6, Nylon 4,6, Nylon 5,10, Nylon 6,10, Nylon 7, Nylon 11, Nylon 12, insbesondere zu Nylon 6 und Nylon 66, führen.

Die Triacetondiamin (TAD)-Endgruppen leiten sich von 4-Amino-2,2, 6, 6-Tetramethylpiperidin ab. Das TAD kann über eine Amino- oder Carboxylgruppe an das Polyamid angebunden sein. Es kann sich so auch beispielsweise um 4-Carboxy-2,2,6,6-Tetramethylpiperdin handeln.

Die Herstellung der Polyamide B ist an sich bekannt oder kann nach an sich bekannten Verfahren erfolgen. So kann die Polymerisation bzw. Polykondensation der Ausgangsmonomere in Gegenwart der Piperdinverbindungen unter üblichen Verfahrensbedingungen vorgenommen werden, wobei die Umsetzung kontinuierlich oder diskontinuierlich erfolgen kann. Die Piperidinverbindungen können aber auch mit einem Kettenregler, wie er üblicherweise für die Herstellung von Polyamiden eingesetzt wird, kombiniert werden. Angaben zu geeigneten Verfahren finden sich z. B. in WO 95/28443, WO 99/41297 oder DE-A 198 12 135. Die TAD-Verbindung wird durch Reaktion mindestens einer der amidbildenden Gruppen R⁷ an das Polyamid gebunden. Die sekundären Aminogruppen der Piperidin-Ringsysteme reagieren dabei wegen sterischer Hinderung nicht.

Es ist auch möglich, Polyamide zu verwenden, die durch Copolykondensation von zwei oder mehr der oben genannten Monomeren oder ihrer Komponenten hergestellt worden sind, z. B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-%, der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Ein teilaromatisches Polyamid ist Nylon 9T, das sich von Nonandiamin und Terephthalsäure ableitet.

Als Monomere können auch cyclische Diamine wie die der allgemeinen Formel V 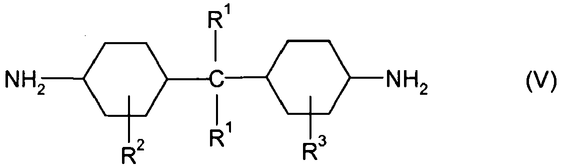 in der
R¹ Wasserstoff oder eine C₁ - C₄-Alkylgruppe,
R² eine C₁ - C₄-Alkylgruppe oder Wasserstoff und
R³ eine C₁ - C₄-Alkylgruppe oder Wasserstoff bedeutet, in Betracht.

Besonders bevorzugte Diamine V sind Bis(4-aminocyclohexyl)methan, Bis(4-amino-3-methylcyclohexyl)methan, Bis(4-aminocyclohexyl)-2,2-propan oder Bis(4-amino-3-methylcyclohexyl)-2,2-propan.

Als weitere Diamine V seien 1,3- oder 1,4-Cyclohexandiamin oder Isophorondiamin genannt. Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, dass der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von ε-Caprolactam ableiten, erwiesen.

Die Herstellung der teilaromatischen Copolyamide kann z. B. nach dem in den EP-A-129 195 und EP-A-129 196 beschriebenen Verfahren erfolgen.

Bevorzugte teilaromatische Polyamide sind solche, die einen Gehalt an Triamineinheiten, insbesondere Einheiten des Dihexamethylentriamins von unter 0,555 Gew.-% aufweisen. Besonders bevorzugt werden solche teilaromatischen Polyamide mit Triamingehalten von 0,3 Gew.-% oder weniger.

Bevorzugt werden lineare Polyamide mit einem Schmelzpunkt über 200 °C.

Bevorzugte Polyamide sind Polyhexamethylenadipinsäureamid, Polyhexamethylensebacinsäureamid und Polycaprolactam sowie Polyamid 6/6T und Polyamid 66/6T sowie Polyamide, die cyclische Diamine als Comonomere enthalten. Die Polyamide weisen im Allgemeinen eine relative Viskosität von 2,0 bis 5 auf, bestimmt an einer 1 gew.-%igen Lösung in 96%iger Schwefelsäure bei 23 °C, was einem Molekurlargewicht (Zahlenmittel) von etwa 15.000 bis 45.000 g/mol entspricht. Polyamide mit einer relativen Viskosität von 2,4 bis 3,5, insbesondere 2,5 bis 3,4, werden bevorzugt verwendet.

Außerdem seien noch Polyamide erwähnt, die z. B. durch Kondensation von 1,4-Diaminobutan mit Adipinsäure unter erhöhter Temperatur erhältlich sind (Polyamid 4,6). Herstellungsverfahren für Polyamide dieser Struktur sind z. B. in den EP-A 38 094, EP-A 38 582 und EP-A 39 524 beschrieben.

Als Komponente C enthalten die thermoplastischen Formmassen schlagzähmodifizierende Kautschuke, insbesondere Pfropfkautschuke. Unter Pfropfkautschuken im Sinne der Erfindung werden Kern-Schale-Kautschuke verstanden, die auch mehrschalig aufgebaut sein können. Es können dabei übliche Schlagzähmodifier verwendet werden, die für Polyamide geeignet sind.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10 °C, vorzugsweise von weniger als -30 °C aufweist, und sie enthalten mindestens eine funktionelle Gruppe, die mit dem Polyamid wechselwirken kann. Geeignete funkionelle Gruppen sind beispielsweise Carbonsäure-, Carbonsäureanhydrid-, Carbonsäureester-, Carbonsäureamid-, Carbonsäureimid-, Amino-, Hydroxyl-, Expoxy-, Urethan- und Oxazolingruppen.

Als Kautschuke, die die Zähigkeit der Blends erhöhen, seien z. B. folgende genannt:

EP- bzw. EPDM-Kautschuke, die mit den o. g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozess bei einem Druck von 400 bis 4.500 bar oder durch Pfropfen der Comonomeren auf das Poly-α-Olefin hergestellt werden. Der Anteil des α-Olefins an dem Copolymeren liegt i. a. im Bereich von 99,95 bis 55 Gew.-%.

Als weitere Gruppe von geeigneten Elastomeren sind Kern- Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25 °C, unter einem weichen Bestandteil ein Polymerisat mit einer Glastemperatur von höchstens 0 °C. Diese Produkte weisen eine Struktur aus einem Kern und mindestens einer Schale auf, wobei sich die Struktur durch die Reihenfolge der Monomerenzugabe ergibt. Die weichen Bestandteile leiten sich i. a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischem oligomerem Octamethyltetrasiloxan oder Tetravinyltetramethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z. B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i. a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste wiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Expoxi- Oxazolin-, Urethan-, Hamstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i. a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i. a. 1 : 9 bis 9 : 1, bevorzugt 3 : 7 bis 8 : 2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiem sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z. B. in der US-A 3 651 014, beschrieben. Auch im Handel sind entsprechende Produkte unter den Bezeichnungen Hytrel® (Du Pont), Amitel® (Akzo) und Pelprene® (Toyobo Co. Ltd.) erhältlich.

Selbstverständlich können auch Mischungen verschiedener Kautschuke eingesetzt werden.

Vorzugsweise handelt es sich um Pfropfkautschuke, die keine ethylenisch ungesättigten Kohlenwasserstoffreste (olefinische Doppelbindungen) enthalten. Besonders bevorzugt handelt es sich um ASA-Kautschuke (Acrylnitril-Styrol-Alkylacrylat-Kautschuke).

Bei der Polymerisation der Hartphase entstehen auch untergeordnete Mengen ungepfropfter Anteile. Diese werden der Hartphase zugerechnet. Es können auch Mischungen verschiedener Kautschuke verwendet werden, wobei sich vorzugsweise die verwendeten Kautschuke in ihren Weichphasenanteilen um mindestens 5 Gew.-% unterscheiden.

Als Komponente D enthalten die erfindungsgemäßen thermoplastischen Formmassen Styrol-Copolymere, die, bezogen auf die gesamte Komponente D, 1,9 - 2,3 Gew.-% von Maleinsäureanhydrid abgeleitete Einheiten aufweisen. Bevorzugt beträgt dieser Anteil 2,0 - 2,2 Gew.-%, insbesondere etwa 2,1 Gew.-%.

Besonders bevorzugt ist Komponente D ein Styrol-Acrylnitril-Maleinsäureanhydrid-Terpolymer.

Im Terpolymer beträgt der Anteil an Acrylnitril, bezogen auf das gesamte Terpolymer, vorzugsweise 10 - 30 Gew.-%, besonders bevorzugt 15 - 30 Gew.-%, insbesondere 20 - 25 Gew.-%. Der verbleibende Rest entfällt auf Styrol.

Die Copolymere haben im allgemeinen Molekulargewichte M_{W} im Bereich von 30.000 bis 500.000 g/mol vorzugsweise von 50.000 bis 250.000 g/mol, insbesondere von 70.000 bis 200.000 g/mol, bestimmt durch GPC unter Verwendung von Tretrahydrofuran (THF) als Eluent und mit Polystyrol-Kalibrierung.

Die Copolymeren können durch freie radikale bildende Polymerisation der entsprechenden Monomere hergestellt werden. Die Herstellung ist beispielsweise in WO 2005/040281, Seite 10, Zeile 31 bis Seite 11, Zeile 8, näher erläutert.

Ferner können auch Styrol-N-Phenylmaleinimid-Maleinsäureanhydrid-Terpolymere eingesetzt werden. Es kann ferner auf die Beschreibungen in EP-A-0 784 080 sowie DE-A-100 24 935 verwiesen werden, wie auch auf DE-A-44 07 485, Beschreibung der dortigen Komponente B auf den Seiten 6 und 7.

Als Komponente E können die erfindungsgemäßen thermoplastischen Formmassen weitere von Komponente C verschiedene Kautschuke enthalten. Werden als Komponente C Pfropfkautschuke verwendet, sind in Komponente E keine Pfropfkautschuke enthalten. Komponente E kann auch wegfallen, insbesondere, wenn Komponente C keine Pfropfkautschuke sind. Als Kautschuke können beispielsweise EthylenCopolymere oder funktionalisierte EP-Kautschuke oder SEBS-Blockkautschuke eingesetzt werden. Für eine weitere Beschreibung der Komponente E kann auf die DE-A-195 26 855, Seiten 10 und 11 mit der dort beschriebenen Komponente E verwiesen werden.

Als Komponente F können die erfindungsgemäßen thermoplastischen Formmassen einen oder mehrere faser- oder teilchenförmige Füllstoffe enthalten. Bevorzugte faserförmige Füll- oder Verstärkungsstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit Schlichte und einem Haftvermittler ausgerüstet sein. Im Allgemeinen haben die verwendeten Kohlenstoff- und Glasfasern einen Durchmesser im Bereich von 6 - 20 µm. Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 - 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Magnesiumcarbonat (Kreide), gepulverter Quarz, Glimmer, Talcum, Feldspat, Glaskugeln und insbesondere Calciumsilicate wie Wollastonit und Kaolin (insbesondere kalzinierter Kaolin).

Besonders bevorzugte Kombinationen von Füllstoffen sind solche aus Glasfasern und Wollastonit.

Als Komponente G können weitere Zusatzstoffe eingesetzt werden. Beispiele hierfür sind Flammschutzmittel, Farbstoffe, Pigmente oder Stabilisatoren, beispielsweise Thermostabilisatoren oder UV-Stabilisatoren, sowie Gleitmittel oder Entformungshilfen.

Die Erfindung betrifft auch ein Verfahren zur Herstellung der vorstehend beschriebenen thermoplastischen Formmassen, bei denen man die Komponenten A - D und gegebenenfalls E - G in beliebiger Reihenfolge miteinander vermischt.

Die Reihenfolge, in der die Komponenten gemischt werden, ist beliebig. Beispielsweise ist die Herstellung der Formmassen möglich, indem die Ausgangskomponenten in üblichen Mischvorrichtungen wie Schneckenextrudern, vorzugsweise 2-Schneckenextrudem, Brabender-Mischern oder Banbury-Mischern, sowie Knetern mischt und anschließend extrudiert. Nach der Extrusion wird das Extrudat abgekühlt und zerkleinert. Die Reihenfolge der Mischungskomponenten kann variiert werden, so können zwei oder gegebenenfalls drei Komponenten vorgemischt werden. Es können aber auch alle Komponenten gemeinsam gemischt werden.

Um eine möglichst homogene Mischung zu erhalten, ist eine intensive Durchmischung vorteilhaft. Dazu sind im Allgemeinen mittlere Mischzeiten von 0,2 - 30 Minuten bei Temperaturen von 240 - 300 °C, bevorzugt 245 - 290 °C erforderlich. Nach der Extrusion wird das Extrudat in der Regel abgekühlt und zerkleinert.

Die erfindungsgemäßen Formmassen zeichnen sich u. a. durch eine verbesserte Schädigungsarbeit bei - 30 °C aus. Zudem zeichnen sie sich auch durch geringere Neigung zur Bildung von Formbelag aus.

Die erfindungsgemäßen thermoplastischen Formmassen können zur Herstellung von Formkörpern, Fasern und Folien verwendet werden. Insbesondere werden sie zur Herstellung von Formkörpern eingesetzt. Dabei werden die Formkörper vorzugsweise in KFZ-Bauteilen oder Elektronikgeräten eingesetzt.

Besondere Vorteile zeigen die erfindungsgemäßen Formmassen bei der Herstellung von Formteilen mit heller Einfärbung, da sie eine sehr geringe Eigenfarbe aufweisen und bei der Spritzgussverarbeitung keine oder nur marginale Texturen ausbilden.

Die Erfindung betrifft auch Formkörper, Fasern und Folien, die aus den erfindungsgemäßen Formmassen aufgebaut sind.

Die Erfindung wird durch die nachstehenden Beispiele näher erläutert.

### Beispiele

### Herstellung und Prüfung der Formmassen

Die Viskositätszahl der Polyamide wird nach DIN 53 727 an 0,5 gew.%-igen Lösungen in 96 Gew.-% Schwefelsäure ermittelt. Die Viskositätszahl der Styrolco- oder -terpolymere wird in 0,5 gew.-%iger DMF-Lösung bei 25 °C bestimmt.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an ISO-Stäben ermittelt.

Die Kerbschlagzähigkeit der Produkte wurde an ISO-Stäben nach ISO 179 1eA bestimmt.

Die Fließfähigkeit wurde nach ISO 1133 bei 240 °C und 5 kg Belastung bestimmt. Die Farbe der Proben wurde nach Lagerung von 1.000 h im Xenotest visuell ermittelt und in die Klassen 1 (keine Verfärbung) bis 5 (intensive Gelbfärbung) eingeteilt.

Die Schädigungsarbeit wurde nach ISO 6603 an Platten (60 x 60 x 3 mm³) bei - 30 °C ermittelt. Dabei wurde die Gesamtarbeit Wₜ verwendet.

Die Emissionsneigung der Formmassen wurde als Gesamt C-Emission nach VDA 277 bestimmt.

### Komponente A

Styrol-Acrylnitril-Copolymer mit 75 Gew.-% Styrol und 25 Gew.-% Acrylnitril und einer Viskositätszahl von 80 ml/g (bestimmt in 0,5 gew.%iger DMF-Lösung bei 25 °C)

### Komponente B 1

Als Polyamid B 1 wurde ein Polyamid 6, erhalten aus ε-Caprolactam, mit einer Viskositätszahl von 150 ml/g (gemessen 0,5 gew.-%ig in 96 %iger Schwefelsäure) verwendet, z. B. Ultramid® B 3.

### Komponente B 2

Als Polyamid B 2 wurde ein Polyamid 6, erhalten aus ε-Caprolactam, mit einer Viskositätszahl von 130 ml/g (gemessen 0,5 gew.%ig in 96 %iger Schwefelsäure) und einem Anteil von Triacetondiamin von 0,16 Gew.-% verwendet.

### Komponente B V

In einen 250 l Autoklaven wurden folgende Substanzen dosiert:

50 kg Caprolactam, 810 g VE-Wasser, 1,25 kg 4-Amino-2,2,6,6-tetramethylpiperidin (TAD). Die Mischung wurde für eine Stunde auf 270 °C erhitzt. Die Mischung wurde 30 Minuten bei diesen Bedingungen belassen, dann wurde der Druck langsam reduziert. Um den Umsatz weiter zu erhöhen, wurde das Reaktionsgemisch 90 Minuten im Vakuum gehalten (ca. 600 mbar). Anschließend wurde das Reaktionsprodukt aus dem Reaktionsgefäß ausgetragen und granuliert. Die erhaltenen Granulate wurden mit 90 °C heißem Wasser extrahiert und anschließend getrocknet. Das erhaltene Polyamid hatte eine Viskositätszahl von 53 ml/g und einen Anteil an TAD von 2,3 Gew.-%.

### Komponente C 1

Pfropfkautschuk mit 62 Gew.-% Polybutadien im Kern und 38 Gew.-% einer Pfropfhülle aus 75 Gew.-% Styrol und 25 Gew.-% Acrylnitril. Mittlere Teilchengröße ca. 400 nm.

### Komponente C 2

Pfropfkautschuk mit 70 Gew.-% Polybutadien im Kern und 30 Gew.-% einer Pfopfhülle aus 75 Gew.-% Styrol und 25 Gew.-% Acrylnitril. Mittlere Teilchengröße ca. 370 nm.

### Komponente DV 1

Als Komponente DV 1 wurde ein Styrol-Acrylnitril-Maleinsäureanhydrid-Terpolymer verwendet, welches eine Zusammensetzung von 74,5/24,5/1,0 (Gew.-%) hatte, Viskositätszahl: 66 ml/g.

### Komponente DV 2

Als Komponente DV 2 wurde ein Styrol-Acrylnitril-Maleinsäureanhydrid-Terpolymer verwendet, welches eine Zusammensetzung von 74,6/23,7/1,7 (Gew.-%) hatte, Viskositätszahl: 67 ml/g.

### Komponente D 3

Als Komponente D 3 wurde ein Styrol-Acrylnitril-Maleinsäureanhydrid-Terpolymer verwendet, welches eine Zusammensetzung von 74,4/23,5/2,1 (Gew.-%) hatte, Viskositätszahl: 66 ml/g.

### Komponente DV 4

Als Komponente DV 4 wurde ein Styrol-Acrylnitril-Maleinsäureanhydrid-Terpolymer verwendet, welches eine Zusammensetzung von 74,6/23,5/2,9 (Gew.-%) hatte, Viskositätszahl: 66 ml/g.

### Komponente F

Schnittglasfaser mit Polyurethanschlichte, Faserdurchmesser 14 µm.

### Herstellung der erfindungsgemäßen Formmassen

Die Komponenten wurden in einem Zweiwellenextruder bei einer Massetemperatur von 240 bis 260 °C gemischt. Die Schmelze wurde durch ein Wasserbad geleitet und granuliert.

Die Ergebnisse der Prüfungen sind in Tabelle 1 aufgeführt:

**Tabelle 1:**

| Formmasse | V 1 | V 2 | V 3 | 4 | V 5 | 6 | V 7 | 8 | 9 | V 10 |
|---|---|---|---|---|---|---|---|---|---|---|
| A | 19 | 19 | 19 | 19 | 19 | 14 | 14 | 14 | 18,2 | 18,2 |
| B 1 | - | 38,3 | 38,3 | - | - | - | 53 | - | - | - |
| B 2 | 41 | - | - | 41 | 41 | 53 | - | 53 | 36,8 | 36,8 |
| BV | - | 2,7 | 2,7 | - | - | - | - | - | - | - |
| C 1 | 35 | 35 | 35 | 35 | 35 | 28 | 28 | 23 | 32 | 32 |
| C2 | - | - | - | - | - | - | - | 5 | - | - |
| DV1 | 5 | 5 | - | - | - | - | 5 | - | - | - |
| DV 2 | - | - | 5 | - | - | - | - | - | - | 5 |
| D3 | - | - | - | - | - | - | - | - | - | - |
| DV 4 | - | - | - | - | 5 | - | - | - | - | - |
| F | - | - | - | - | - | - | - | - | 8 | 8 |
| Vicat B [°C] | 103 | 101 | 101 | 104 | 103 | 115 | 115 | 115 | 109 | 109 |
| MVI [ml/10'] | 12,9 | 11,5 | 11,8 | 19,2 | 16,4 | 25,3 | 27,2 | 26,1 | 5,3 | 3,7 |
| ak, RT (kJ/m²] | 24,3 | 21,2 | 51 | 60,2 | 25,3 | 63,4 | 24,3 | 68,4 | 10,7 | 8,3 |
| ak,-30°C [kJ/M²] | 10,2 | 9,4 | 11,4 | 16,1 | 12,2 | 15,3 | 12,3 | 17,2 | n.b. | n.b. |
| Farbe | 2 | 2 | 2 | 2 | 2 | 1 - 2 | 1 - 2 | 1 - 2 | 1 - 2 | 1 - 2 |
| W_{t-30°C} [Nm] | 19,1 | 5,3 | 10,1 | 51,5 | 21,2 | 65,1 | 17,1 | 71,2 | 6,2 | 3,4 |
| C-Emiss. [mg/kg] | 60 | 98 | 89 | 47 | 46 | 31 | 39 | 30 | 25 | 26 |

Die erfindungsgemäßen Formmassen weisen verbesserte Fließfähigkeit und Farbstabilität auf. Gegenüber dem Stand der Technik lassen sich Produkte mit deutlich verbesserter Schädigungsarbeit bei - 30 °C erhalten. Überraschenderweise weisen die erfindungsgemäßen Produkte auch geringere C-Emissionen auf.

## Patentansprüche

1. Thermoplastische Formmasse, enthaltend,
a) 3 bis 79 Gew.-% eines oder mehrerer Styrolcopolymere, die keine von Maleinsäureanhydrid abgeleiteten Einheiten aufweisen, als Komponente A,
b) 15 bis 91 Gew.-% eines oder mehrerer Polyamide mit, bezogen auf die gesamte Komponente B, 0,1 bis 0,2 Gew.-% Triacetondiamin (TAD)-Endgruppen, als Komponente B,
c) 5 bis 50 Gew.-% eines oder mehrerer schlagzäh-modifizierender Kautschuke als Komponente C,
d) 1 bis 25 Gew.-% eines Styrolcopolymeren, das, bezogen auf die gesamte Komponente D, 1,9 bis 2,3 Gew.-% von Maleinsäureanhydrid abgeleitete Einheiten aufweist, als Komponente D,
e) 0 bis 40 Gew.-% weiterer Kautschuke als Komponente E,
f) 0 bis 50 Gew.-% eines oder mehrerer faser- oder teilchenförmiger Füllstoffe als Komponente F,
g) 0 bis 40 Gew.-% weiterer Zusatzstoffe als Komponente G,
wobei die Formmasse weniger als 0,1 Gew.-% Phthalsäureanhydrid enthält und die Gesamtmenge der Komponenten A bis D und gegebenenfalls E bis G 100 Gew.-% ergibt.

2. Formmasse nach Anspruch 1, **dadurch gekennzeichnet, dass** Komponente D 2,0 bis 2,2 Gew.-% von Maleinsäureanhydrid abgeleitete Einheiten aufweist.

3. Formmasse nach Anspruch 2, **dadurch gekennzeichnet, dass** Komponente D etwa 2,1 Gew.-% von Maleinsäureanhydrid abgeleitete Einheiten aufweist.

4. Formmasse nach einem der Ansprüche 1 bis 3, **dadurch gekennzeichnet, dass** die Formmasse kein Phthalsäureanhydrid enthält.

5. Formmasse nach einem der Ansprüche 1 bis 4, **dadurch gekennzeichnet, dass** Komponente B 0,14 bis 0,18 Gew.-% Triacetondiamin (TAD)-Endgruppen aufweist.

6. Formmasse nach einem der Ansprüche 1 bis 5, **dadurch gekennzeichnet, dass** Komponente D ein Styrol-Acrylnitril-Maleinsäureanhydrid (MSA)-Terpolymer ist.

7. Formmasse nach einem der Ansprüche 1 bis 6, **dadurch gekennzeichnet, dass** Komponente A ein Styrol-Acrylnitril-Copolymer ist.

8. Verfahren zur Herstellung von thermoplastischen Formmassen nach einem der Ansprüche 1 bis 7, **dadurch gekennzeichnet, dass** man die Komponenten A bis D und gegebenenfalls E bis G in beliebiger Reihenfolge miteinander vermischt.

9. Verwendung von thermoplastischen Formmassen nach einem der Ansprüche 1 bis 7 zur Herstellung von Formkörpern, Folien oder Fasern.

10. Verwendung nach Anspruch 9, **dadurch gekennzeichnet, dass** die Formkörper KFZ-Bauteile oder Teile von Elektronikgeräten sind.

11. Formkörper, Fasern oder Folien aus einer thermoplastischen Formmasse nach einem der Ansprüche 1 bis 7.

## Claims

1. A thermoplastic molding composition, comprising
a) as component A, from 3 to 79% by weight of one or more styrene copolymers which have no units derived from maleic anhydride,
b) as component B, from 15 to 91% by weight of one or more polyamides having, based on the entire component B, from 0.1 to 0.2% by weight of triacetonediamine (TAD) end groups,
c) as component C, from 5 to 50% by weight of one or more impact-modifying rubbers,
d) as component D, from 1 to 25% by weight of a styrene copolymer which, based on the entire component D, has from 1.9 to 2.3% by weight of units derived from maleic anhydride,
e) as component E, from 0 to 40% by weight of further rubbers,
f) as component F, from 0 to 50% by weight of one or more fibrous or particulate fillers,
g) as component G, from 0 to 40% by weight of further additives,
where the molding composition comprises less than 0.1% by weight of phthalic anhydride and the total amount of components A to D and, if appropriate, E to G is 100% by weight.

2. The molding composition according to claim 1, wherein component D has from 2.0 to 2.2% by weight of units derived from maleic anhydride.

3. The molding composition according to claim 2, wherein component D has about 2.1% by weight of units derived from maleic anhydride.

4. The molding composition according to any of claims 1 to 3, which comprises no phthalic anhydride.

5. The molding composition according to any of claims 1 to 4, wherein component B has from 0.14 to 0.18% by weight of triacetonediamine (TAD) end groups.

6. The molding composition according to any of claims 1 to 5, wherein component D is a styreneacrylonitrile-maleic anhydride (MA) terpolymer.

7. The molding composition according to any of claims 1 to 6, wherein component A is a styreneacrylonitrile copolymer.

8. A process for the production of thermoplastic molding compositions according to any of claims 1 to 7, which comprises mixing components A to D and optionally E to G with one another in any desired sequence.

9. The use of thermoplastic molding compositions according to any of claims 1 to 7 for the production of moldings, foils, or fibers.

10. The use according to claim 9, wherein the moldings are motor-vehicle components or parts of electronic equipment.

11. A molding, fiber, or foil composed of a thermoplastic molding composition according to any of claims 1 to 7.

## Revendications

1. Composition de moulage thermoplastique comprenant,
a) en tant que composant A: de 3 à 79% en poids d'un ou plusieurs copolymères de styrène, ne comportant pas d'unités dérivant d'anhydride de l'acide maléique,
b) en tant que composant B: de 15 à 91% en poids de un ou plusieurs polyamides comprenant, exprimés sur la base de la totalité du composant B, de 0,1 à 0,2% en poids de groupes terminaux triacétonediamine (TAD),
c) en tant que composant C: de 5 à 50% en poids d'un ou plusieurs caoutchoucs modifiés pour résister aux chocs,
d) en tant que composant D: de 1 à 25% en poids d'un copolymère de styrène, comprenant, exprimé sur la base sur la base de la totalité du composant D, de 1,9 à 2,3% en poids d'anhydride maléique comprenant des unités dérivant d'anhydride de l'acide maléique,
e) en tant que composant E: de 0 à 40% en poids de caoutchouc,
f) en tant que composant F: de 0 à 50% en poids d'un ou plusieurs charges particulaires ou fibreuses,
g) en tant que composant G: de 0 à 40% en poids d'autres additifs,
ladite composition de moulage contenant moins de 0,1% en poids d'anhydride de l'acide phtalique et la quantité totale des composants A à D et éventuellement E à G formant 100% en poids.

2. Composition de moulage selon la revendication 1, **caractérisée en ce que** le composant D contient de 2,0 à 2,2% en poids d'unités dérivant d'anhydride de l'acide maléique.

3. Composition de moulage selon la revendication 2, **caractérisée en ce que** le composant D contient environ 2,1% en poids d'unités dérivant d'anhydride de l'acide maléique.

4. Composition de moulage selon l'une quelconque des revendications 1 à 3, **caractérisée en ce que** la composition de moulage ne contient pas d'anhydride de l'acide phtalique.

5. Composition de moulage selon l'une quelconque des revendications 1 à 4, **caractérisé en ce que** le composant B comporte de 0,14 à 0,18% en poids de groupes terminaux triacétonediamine (TAD).

6. Composition de moulage selon l'une quelconque des revendications 1 à 5, **caractérisée en ce que** le composant D est un terpolymère styrène-acrylonitrile-anhydride de l'acide maléique (MA) terpolymère.

7. Composition de moulage selon l'une quelconque des revendications 1 à 6, **caractérisée en ce que** le composant A est un copolymère styrène-acrylonitrile.

8. Procédé de préparation de compositions de moulage thermoplastiques selon l'une quelconque des revendications 1 à 7, **caractérisé en ce que** les composants A à D et le cas échéant E à G sont mélangés entre eux dans un ordre quelconque.

9. Application des masses de moulage thermoplastiques selon l'une quelconque des revendications 1 à 7, pour la production de pièces moulées, de feuilles ou de fibres.

10. Application selon la revendication 9, **caractérisée en ce que** les pièces moulées sont des pièces automobiles ou des parties d'appareils électroniques.

11. Pièces moulées, fibres ou films formées à partir d'une composition de moulage thermoplastiques selon l'une quelconque des revendications 1 à 7.
